# EUROPEAN PATENT APPLICATION

(11) **EP 0 985 569 A2**
(43) Date of publication of application: **15.03.2000**
(21) Application number: 99117674.4
(22) Date of filing: 08.09.1999
(51) Int. Cl.: B60J 3/02

(54) **Anti-intrusion bar**

(30) Priority: 09.09.1998 IT TO980762
(71) Applicant: Frigostamp S.p.A., 10121 Torino (IT)
(72) Inventor: Fariello, Massimo, 10 100 Torino (IT)
(74) Representative: Lotti, Giorgio

(57) **Abstract**

Anti-intrusion bar (1), in a first not deformed configuration, delimited by a first impact plane (K1) and by a deformation plane (S) which are parallel among them, their cross section presenting: a first U-shaped wall (Z) basically tangential to the first plane (K1); two second L-shaped walls (6) connected to the first wall (2) externally to the first wall (2) itself, the corners of the second walls (6) being tangential to the deformation plane (S); and two third walls (12) connected to the second walls (6) externally to the second walls (6) themselves, and oriented according to the respective acute angles in relationship with a second impact plane (K2), passing through the opposite ends of the second walls (6) themselves; in a deformed configuration of the bar (1), the first and the second impact plane (K1, K2) being basically superposed among them, and the cross section of the bar (1) itself taking a so-called "fret" configuration.

## Description

The present invention relates to an anti-intrusion bar.

More in particular, the present invention relates to an anti-intrusion bar with an open structure, that can be advantageously used to reinforce car doors, the following disclosure being explicitly referred to this use yet keeping its general character.

It is a few years now, that in order to make cars safer for passengers on board, car doors have been provided with anti-intrusion bars adapted to increase the resistance of the car doors themselves in case of side impacts. Different types of anti-intrusion bars exist and their characteristics depend on choice of materials, dimensions and position inside the car door in order to always achieve the maximum protection against the deformation forces due to side impacts.

It is an object of the present invention to provide an anti-intrusion bar, the production of which can be easy, economical and ecological, and which allows not only to take advantage of the whole material of which it is made but also to combine high capacity to absorb impact forces with relatively low weight and size.

An anti-intrusion bar is realised according to the present invention, said bar being delimited, in a first not deformed configuration, by a first impact plane and by a deformation plane which are parallel among them and are located, at a first absorption distance from each other; the bar comprising, in a cross section at a longitudinal flexure axis: a first U-shaped wall presenting a central portion basically tangential to the first plane, and two respective side portions which are parallel among them and square to the central portion itself; two second L-shaped walls a first end of which is connected to respective free ends of the relative side portions of the first wall externally to the first wall itself, the corners of the second walls being tangential to said deformation plane; and two third walls connected with respective second free ends of the relative said second walls externally to the second walls themselves; the bar being characterised in that it includes also a second impact plane placed between said two planes and parallel to them, which basically passes along said first ends of said second walls; said third walls forming, in said first not deformed configuration, respective acute angles with said second plane; in a deformed configuration of the bar, said first and second impact planes being overlapped and the bar itself taking, in said cross section, a so-called "fret" configuration.

In the following the invention will be described with reference to the appended drawings illustrating a non-restrictive embodiment, in which:
FIG. 1 is a perspective view of a first preferred embodiment of an anti-intrusion bar according to the present invention;
FIGG. 2, 3 and 4 show a cross section of a deformation sequence of the bar in figure 1;
FIG. 5 shows a cross section of the bar in figure 1 in a respective intermediate deformed configuration; and
FIG.6 is a perspective view of a second preferred embodiment of the anti-intrusion bar in figure 1.

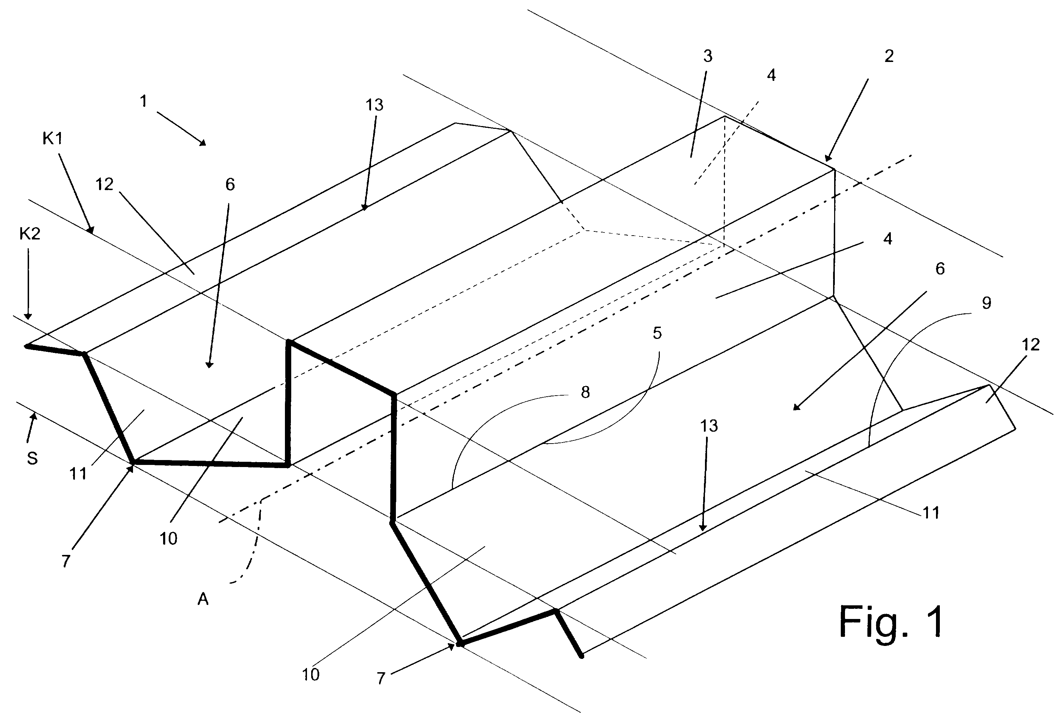

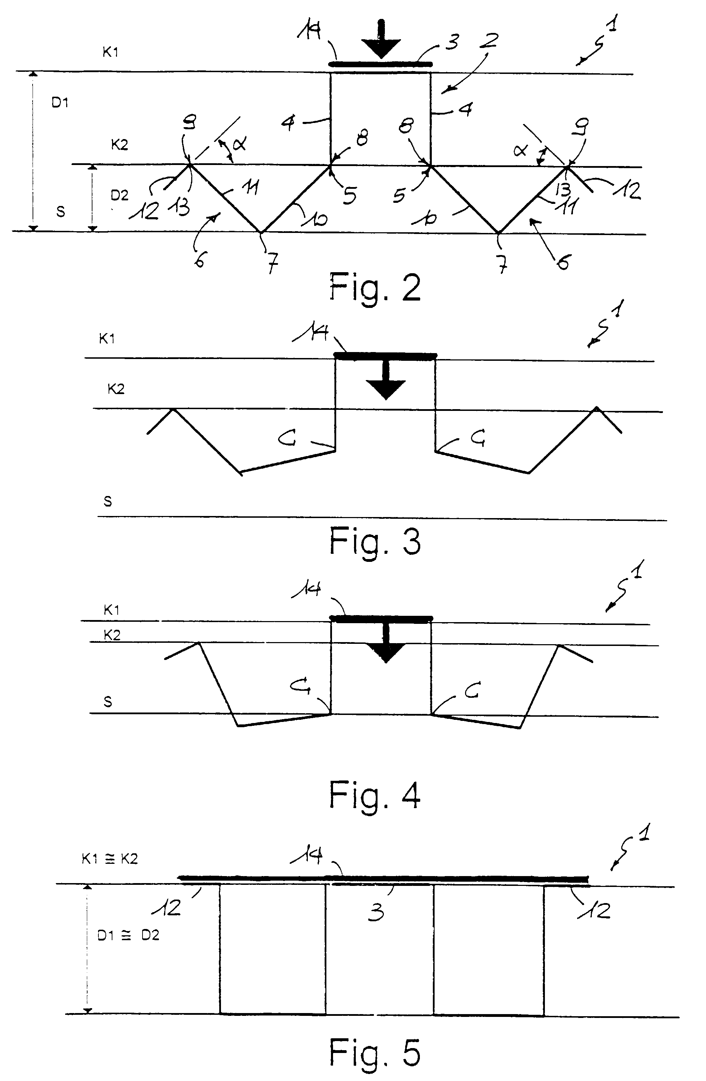

With reference to figures 1 and 2, the reference number 1 indicates an anti-intrusion bar with an open structure and presenting a longitudinal flexure axis A.

The bar 1 comprises a front impact plane K1 and a back deformation plane S which are parallel among them and placed at a determined absorption distance D1, the one from the other, in order to delimit the bar 1 itself in a respective not deformed first configuration.

The bar 1 is made of high resistance steel or of aluminium alloy, and is adapted to be fixed to a car door frame (not shown) by means of different types of known assembling devices not shown.

The bar 1 comprises a basically U-shaped central wall 2 which, on turn, comprises a back panel 3 which is basically coplanar and tangential to the plane K1, and two side panels 4 located on opposite sides in relationship with panel 3 and transversal to the panel 3 itself. The panels 4 are rigidly connected to the panel 3 and present respective free longitudinal end edges 5.

Besides, the bar 1 comprises two L-shaped walls 6, the concave parts of which are opposed to a concavity in the wall 2, and which present respective corners 7 which are tangential to the plane S. The walls 6 are connected to the wall 2 externally to the wall 2 itself, each of them presenting two respective free edges 8 and 9, parallel to the axis A, and placed at opposite side in relationship with the relative corner 7, the edge 8 of which is connected to the relative edge 5 in order to form a rotation hinge C for the wall 6 in relationship with the wall 2. Each wall 6 comprises also two panels 10 and 11, which are basically square between them, the panel 10 being delimited by the edge 8 and by the corner 7 and therefore connected to the relative side panel 4 of the wall 2, and the panel 11 being delimited by the corner 7 and by the edge 9.

Besides, the bar 1 comprises two additional walls 12, which are connected to the relative walls 6 along the edges 9, and are placed externally to the walls 6 themselves. In particular, the walls 12 are connected to the relative panels 11 along the edges 9, thus defining, along the respective connection area, respective corners 13 which are basically rounded and parallel to the axis A.

Finally, the bar 1 comprises and additional impact plane K1, which is placed between the planes K1 and S, is parallel to these two planes and in basically located in correspondence with the edges 8 and 9 of the walls 6. In particular, in the non-deformed configuration already mentioned, the plane K2 is placed at a distance D2 from the plane K1, the walls 12 form respective acute angles * with the plane K2 itself and the bar 1 is located in such a way that its wall 2 lays in the space between the planes K1 and K2, and the walls 6 and 12 are in the space between the planes K2 and S.

Figures 2, 3, 4 and 5 show a sequence of deformed configurations of the bar 1 caused by the impact of a body 14 against the bar 1 itself in a direction which is basically transversal to the plane K1, starting from the plane K1 itself.

The body 14 initially hits only the back panel 3 of the wall 2, and begins deforming the bar 1 thus making the walls 6 progressively rotate on said hinges C, and making the plane K2 progressively move so that it gets nearer to the plane K1 yet remaining basically tangential to the corners 13. The deformation of the bar 1 makes the bar 1 itself absorb part of the kinetic energy of the body 14.

When the planes K1 and K2 are basically superposed, the body 14 hits also the walls 12 which, due to the rotation of the walls 6 on the respective hinges C, have been progressively reached by the plane K1. Being the planes K1 and K2, as well as the walls 12, coplanar to the panel 3, a deformed condition of the bar 1 is defined in which the angles * are practically cancelled and the distance D1 between the plane S and the plane K1 has been reduced thus becoming almost the same as the distance D2.

The deformed configuration (figure 5) of the bar 1 corresponds also to the normal configuration of the known anti-intrusion bars with "fret" cross profile, and the bar 1, which at this point, also presents a cross "fret" profile, presents a residual elastic absorption energy different from zero so that it can undergo additional deformation bending itself in relationship with the axis A in order to absorb additional kinetic energy from the body 14. It is to be noted that figures 2-5 show the deformation phases of the bar 1 caused by a static test according to rule USA FMVSS 214.

It becomes evident, from the above description, that the performance of the bar 1 is higher not only that that of the normal bars with "fret" cross profile but also than that of many other known anti-intrusion bars with open section. The last ones, in fact, not only get deformed in a basically unpredictable way but also begin to get deformed starting from a first configuration that corresponds to the deformed configuration of the bar 1: that is why they can absorb an amount of kinetic energy which is lower than the amount absorbed by the bar 1 itself.

Besides, once they have gone beyond the field of the elastic deformation, the bars of known types collapse quickly, thus preventing the optimum exploitation of the materials of which they are made. On the contrary, the way the bar 1 will get deformed is predefined at the design phase: the corners are preferred deformation areas so that the modern structural calculations make it easy to calculate the amount of energy that the corners can absorb, and it becomes possible to predict, with good approximation, the dynamics of the deformation of the bar 1 itself. Once the contour conditions have been set on the value of the amplitude of the dihedral angles subtended by the corners, as well as on the value of the maximum displacements that the bar is supposed to undergo under certain conditions, it becomes quite easy to predict the way in which the bar 1 will get deformed as a consequence of an impact.

In conclusion, the bar 1 gets deformed according to two well-defined consequential ways of deformation: the first way makes the bar pass from the first not deformed configuration, corresponding to the manufacturing configuration of the bar 1 itself, to an intermediate deformed configuration yet remaining inside the field of the elastic deformation; the second way, together with the action of the body 14 on the walls 12, makes the bar pass from the intermediate deformed configuration to a final deformed configuration (not shown) which is basically typical of the bars with fret cross profile.

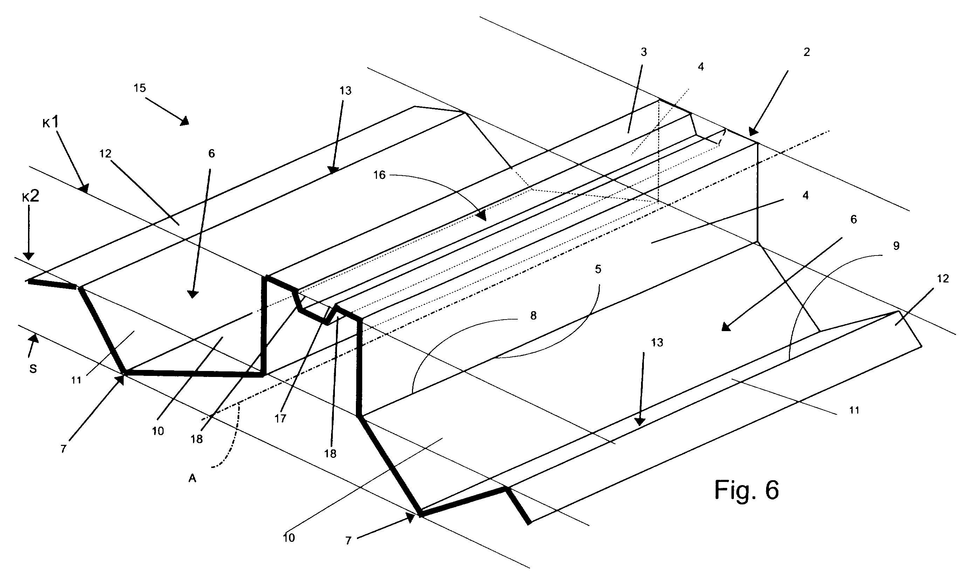

The embodiment shown in figure 6 relates to an anti-intrusion bar similar to the bar 1, the bar 15 being different from the bar 1 since it comprises a longitudinal groove 16 which extends along the panel 3 and is basically located in a position which is central to the panel 3 itself.

The groove 16, the length of which may be equal to the entire length of the panel 3 or to just a part of it, is placed with its concavity facing the opposite side of the panels 4 and presents a back wall 17 basically parallel to the panel 3, and two side oblique walls 18, placed on the opposite sides of the wall 17, connecting the wall 17 itself to the panel 3.

The presence of the groove 16 in the bar 15 gives additional stability to the bar 15 in relationship to the bar 1, and increases the amount of energy that the bar 15 absorbs in the areas which are not directly affected by the impact.

Besides, and according to the above description, the rotation of the walls 6 on the relative hinges C causes the absorption of the impact energy and so, the more are the flat tracts rotating on the hinges, the more is the energy absorbed with major elastic deformations before the occurrence of a first plastic hinge that not only stops the propagation of the deformation along the bar, but also makes the bar collapse quickly.

In both the case of bar 1 and the case of bar 15, the dimensioning of the radius of curvature of the corners 7 and the hinges C according to the thickness of the material being used, emphasises the absorption of the impacts and the exploitation of the material. In particular, more marked corners 7 and hinges C mean additional increase in the above described characteristics of absorption, and the radius' lower limit is represented by a thickness S of the bar.

## Claims

1. Anti-intrusion bar (1) which in a first non-deformed configuration is delimited by a first impact plane (K1) and by a deformation plane (S) which are mutually parallel and placed at a first absorption distance (D1) the one from the other; the bar (1) comprising, in a section transversal to a longitudinal flexure axis (A):
a first U-shaped wall (2) presenting a central portion (3) and placed basically tangential to the first plane (K1) and two respective side portions (4) mutually parallel and square to the central portion (3) itself;
two second L-shaped walls (6) a first end (8) of which is connected with respective free ends (5) of the relative side portions (4) of the first wall (2) externally to the first wall (2) itself, the corners (7) of the second walls (6) being tangential to said deformation plane (S); and
two third walls (12) connected with respective second free ends (9) of the relative said second walls (6) externally to the second walls (6) themselves;
the bar (1) being characterised in that it includes also a second impact plane (K2) placed between said two planes (S, K1) and parallel to them, which basically passes along said first and second ends (8, 9) of said second walls (6); said third walls (12) forming, in said first not deformed configuration, respective acute angles (*) with said second plane (K2); in a deformed configuration of the bar (1), said first and second impact planes (K1, K2) being overlapped and the bar (1) itself taking, in said cross section, a so-called "fret" configuration.

2. Bar as claimed in claim 1, characterised in that in said first not deformed configuration, said first and second impact planes (K1, K2) delimit said first wall (2) and are placed at a second absorption distance (D2) the one from the other, which is shorter than said first distance (D1); in said deformed configuration, being the distance between said deformation plane (S) and said first and second impact planes (K1, K2) basically equivalent to said second deformation distance (D2).

3. Bar as claimed in claim 1 or 2, characterised in that in said deformed configuration, said third walls (12) form respective basically null angles with said second impact plane (K2).

4. Bar as claimed in claim 3, characterised in that in said deformed configuration the central portion (3) of said first wall (2) and said two third walls (12) are basically coplanar to each other and to said second impact plane (K2).

5. Bar as claimed in claim 1, characterised in that said deformed configuration is an intermediate deformation configuration, in which the bar (1) itself presents a residual elastic absorption energy which is different from zero.

6. Bar as claimed in any of the previous claims, characterised in that said second walls (6) comprise each a first longitudinal panel (10) identified by the relative first end (8) and by a relative corner (7), and a second longitudinal panel (11) identified by the relative second end (9) and by the corner (7) itself; said third walls (12) being oriented in such a way that they are basically parallel to the relative second panels (10) both in the first not deformed configuration and in said deformed configuration.

7. Bar as claimed in claim 6, characterised in that said first wall (2) comprises two respective second longitudinal panels (4) which are transversal to said first impact plane (K1) in order to form, with said first longitudinal panels (10) of said second walls (6), respective hinges (C) for the mutual rotation between each second wall (6) and said first wall (2); the hinges (C) being parallel to said axis (A).

8. Bar as claimed in any of the previous claims, characterised in that it comprises a longitudinal groove (16) made in said central portion (3) and adapted to give additional stability to the bar (15) increasing the amount of energy that the bar (15) absorbs in the areas which are not directly affected by the impact, and to prolong an elastic behaviour of the bar (15) itself.

9. Bar as claimed in claim 8, characterised in that said groove (16) presents a concavity opposite to a concavity of the bar (15) itself.

10. Bar as claimed in any of the previous claims, characterised in that said corners (7) present a radius of curvature that is proportional and/or equal to a thickness (S) of the bar.

11. Anti-intrusion bar, basically as described with reference to any of the appended drawings.
